# DEMANDE DE BREVET EUROPEEN

(11) **EP 1 501 024 A1**
(43) Date de publication de la demande: **26.01.2005**
(21) Numéro de dépôt: 04015036.9
(22) Date de dépôt: 25.06.2004
(51) Int. Cl.: G06F 17/30

(54) **Procédé de pointage synchronisé d'un objet du contenu d'une page web affichée simultanément dans une pluralité de terminaux utilisateurs connectés à un réseau de type internet**

(30) Priorité: 23.07.2003 FR 0350365
(71) Demandeur: FRANCE TELECOM, 75015 Paris (FR)
(72) Inventeur: Paimparay, Christophe, 22300 Lannion (FR); Moniz, Emmanuel, 22300 Lannion (FR)

(57) **Abrégé**

Un procédé de pointage synchronisé d'un objet du contenu d'une page Web affichée simultanément dans un ensemble de terminaux utilisateurs connectés à un réseau de type Internet, comprenant une étape préalable de chargement de la page Web par un navigateur Web dans chaque terminal utilisateur, comporte les étapes suivantes mises en oeuvre dans chaque terminal utilisateur : (A) - en réponse à la sélection (E11) d'un objet de la page Web, exécution d'une première portion de code de la page Web et affichage (E12, E13) en conséquence d'un marqueur dans la fenêtre du navigateur à l'emplacement de l'objet sélectionné ; (B) - exécution d'une seconde portion de code de la page Web et envoi (E14) en conséquence d'une information représentative de l'emplacement du marqueur dans la fenêtre du navigateur à un serveur sur le réseau afin de l'y stocker en tant qu'information de position de référence de marqueur ; (C) - exécution périodique d'une troisième portion de code de la page Web et envoi (E15) en conséquence au serveur d'une requête de lecture de l'information courante de position de référence de marqueur ; (D) - réception (E16) d'une réponse contenant l'information courante de position de référence de marqueur, exécution d'une quatrième portion de code de la page Web et affichage (E17, E18) en conséquence d'un marqueur dans la fenêtre du navigateur à la position de référence de marqueur.

## Description

La présente invention a trait au domaine de l'activité coopérative sur le Web (*World Wide Web*) par laquelle les navigateurs Web d'une pluralité de terminaux utilisateurs connectés à un réseau de type Internet sont synchronisés pour l'affichage simultané de pages Web. Plus particulièrement, l'invention concerne un procédé de pointage synchronisé d'un objet du contenu d'une page Web affichée simultanément dans un ensemble de terminaux utilisateurs connectés à un réseau de type Internet.

A l'heure actuelle, les utilisateurs de postes de travail bénéficient des modes d'accès les plus divers vers le réseau Internet. Parmi ces modes d'accès, on peut citer notamment, la liaison par modem par l'intermédiaire du réseau commuté (RTC), la liaison par modem à haut débit (ADSL) ou encore, la liaison au réseau Internet par l'intermédiaire d'un réseau privé sécurisé par un pare-feu. Les différents modes de connexion et d'accès précités impliquent des contraintes dues notamment aux éléments de sécurité des réseaux d'entreprises, encore désignés par intranet, lorsqu'ils utilisent les protocoles de communication et les technologies de réseau Internet.

Dans le cadre de la diffusion simultanée de pages Web sur l'Internet, le pointage synchronisé du contenu d'une page Web affichée simultanément dans plusieurs terminaux utilisateurs connectés au réseau, est l'opération par laquelle, lorsque l'un des utilisateurs clique avec sa souris sur un élément de la page Web, dans chacun des autres terminaux utilisateurs, le pointeur graphique, associé au dispositif de pointage correspondant, se déplace de manière synchronisée sur l'élément sélectionné de la page Web.

A l'heure actuelle, les différentes solutions de pointage synchronisé du contenu de pages Web nécessitent, en plus d'un navigateur Web, l'installation préalable d'un logiciel spécifique sur le poste de travail de chacun des participants à la session ou réunion de travail sur le Web. D'autres solutions requièrent le téléchargement d'un logiciel complémentaire tel qu'un *plug-in* (parfois désigné par "plugiciel" en français).

Les diverses solutions précitées présentent l'inconvénient d'une part de ne pas pouvoir fonctionner avec un navigateur Web standard, c'est-à-dire sans installer ou télécharger de logiciels complémentaires, et d'autre part de ne pas fonctionner dans des environnements très sécurisés, en particulier lorsque les pages Web sont téléchargées au travers d'un pare-feu ou d'un serveur proxy (encore désigné par serveur "mandataire").

La présente invention a pour objet de remédier aux inconvénients des solutions actuellement proposées. A cet effet, l'invention concerne selon un premier aspect, un procédé de pointage synchronisé d'un objet du contenu d'une page Web affichée simultanément dans une pluralité de terminaux utilisateurs connectés à un réseau de type Internet, ledit procédé comprenant une étape préalable de chargement de ladite page Web par un navigateur Web dans chaque terminal utilisateur. Conformément à l'invention, ce procédé est remarquable en ce qu'il comporte les étapes suivantes mises en oeuvre dans chaque terminal utilisateur :
(A) - en réponse à la sélection d'un objet de la page Web, exécution d'une première portion de code de la page Web et affichage en conséquence d'un marqueur dans la fenêtre du navigateur à l'emplacement de l'objet sélectionné ;
(B) - exécution d'une seconde portion de code de la page Web et envoi en conséquence d'une information représentative de l'emplacement du marqueur dans la fenêtre du navigateur à un serveur sur le réseau afin de l'y stocker en tant qu'information de position de référence de marqueur ;
(C) - exécution périodique d'une troisième portion de code de la page Web et envoi en conséquence au serveur d'une requête de lecture de l'information courante de position de référence de marqueur ;
(D) - réception d'une réponse contenant l'information courante de position de référence de marqueur, exécution d'une quatrième portion de code de la page Web et affichage en conséquence d'un marqueur dans la fenêtre du navigateur à la position de référence de marqueur.

Grâce aux portions de code incorporées directement dans le code de la page Web lue, et exécutées par le navigateur Web lors de la lecture de la page Web, on obtient un procédé de pointage synchronisé sans qu'il soit nécessaire, contrairement à l'état de l'art, de télécharger ou installer au préalable un logiciel additionnel dans chacun des terminaux utilisateurs.

En pratique, les première, seconde, troisième et quatrièmes portions de code précitées sont des fonctions écrites dans un langage de script de type JavaScript, ces fonctions étant intégrées dans le code hypertexte (par ex., HTML) de la page Web considérée.

Ainsi, chacun des terminaux utilisateurs, via leur navigateur Web standard, communique avec le serveur de pages Web, uniquement en utilisant le protocole HTTP, ce qui est compatible avec le niveau de sécurité requis pour certains réseaux privés, utilisant en particulier des pare-feu et/ou des serveurs proxy.

Selon un second aspect, l'invention concerne des pages Web téléchargeables à partir d'un serveur sur un réseau de type Internet, ces pages étant aptes à mettre en oeuvre un procédé de pointage synchronisé tel que brièvement exposé supra, lorsqu'elles sont affichées simultanément dans un ensemble de terminaux utilisateurs connectés au réseau. Conformément à la présente invention, chacune de ces pages Web, affichée dans un terminal utilisateur quelconque parmi l'ensemble de terminaux utilisateurs, est remarquable en ce qu'elle comporte les portions de code suivantes :
- une première portion de code exécutée en réponse à la sélection, dans le terminal utilisateur, d'un objet de la page Web, pour afficher un marqueur à l'emplacement de l'objet sélectionné dans la fenêtre du navigateur du terminal utilisateur ;
- une seconde portion de code exécutée en réponse à la sélection, dans le terminal utilisateur, d'un objet de la page Web, pour envoyer une information représentative de l'emplacement de l'objet sélectionné dans la fenêtre du navigateur du terminal, à un serveur sur le réseau afin de l'y stocker en tant qu'information de position de référence de marqueur ;
- une troisième portion de code exécutée périodiquement dans le terminal utilisateur pour envoyer au serveur une requête de lecture de l'information courante de position de référence de marqueur ;
- une quatrième portion de code exécutée lors de la réception, dans le terminal utilisateur, d'une réponse contenant l'information courante de position de référence de marqueur, pour afficher un marqueur dans la fenêtre du navigateur du terminal, à la position de référence de marqueur.

L'invention vise aussi un serveur de pages Web sur un réseau de type Internet, ce serveur étant remarquable en ce qu'il héberge des pages Web selon l'invention telles que succinctement exposées supra.

L'invention vise encore un serveur sur un réseau de type Internet, remarquable en ce qu'il comporte des moyens de mémorisation d'une information de position de référence de marqueur et des moyens de traitement aptes à recevoir des requêtes de terminaux utilisateurs et envoyer des réponses correspondantes vers les terminaux utilisateurs, afin de mettre en oeuvre un procédé de pointage selon l'invention, tel que succinctement défini supra.

L'invention concerne également un terminal utilisateur, notamment un ordinateur personnel, relié à un réseau de type Internet, dans lequel est affichée au moins une page Web selon l'invention, au cours d'une session de travail coopératif consistant à l'affichage simultané de pages Web dans une pluralité de terminaux utilisateurs et mettant en oeuvre un procédé de pointage en conformité avec la présente invention.

L'invention concerne aussi un système de diffusion simultanée de documents électroniques sur un réseau de type Internet entre différents utilisateurs de terminaux connectés au réseau, au cours d'une session commune consistant en un accès commun à un serveur dédié, ce système incluant des moyens aptes à mettre en oeuvre un procédé de pointage synchronisé selon l'invention.

Les avantages liés à l'utilisation de pages Web selon l'invention, de serveurs selon l'invention, d'un terminal utilisateur dans lequel sont chargées des pages Web selon l'invention, et du système précité de diffusion simultanée de documents, sont identiques à ceux du procédé de pointage synchronisé selon l'invention, tels que brièvement exposés supra.

D'autres particularités et avantages de l'invention apparaîtront encore dans la description ci-après d'un mode préféré de réalisation, décrit à l'appui des dessins annexés, sur lesquels :
- la figure 1 représente, à titre illustratif, l'architecture d'un système de diffusion automatique et simultané de documents électroniques sur Internet dans lequel on peut mettre en oeuvre la présente invention ; et
- la figure 2 est un organigramme illustrant un procédé, selon l'invention, de pointage synchronisé d'un objet du contenu d'une page Web affichée simultanément dans une pluralité de terminaux utilisateurs connectés à un réseau de type Internet.

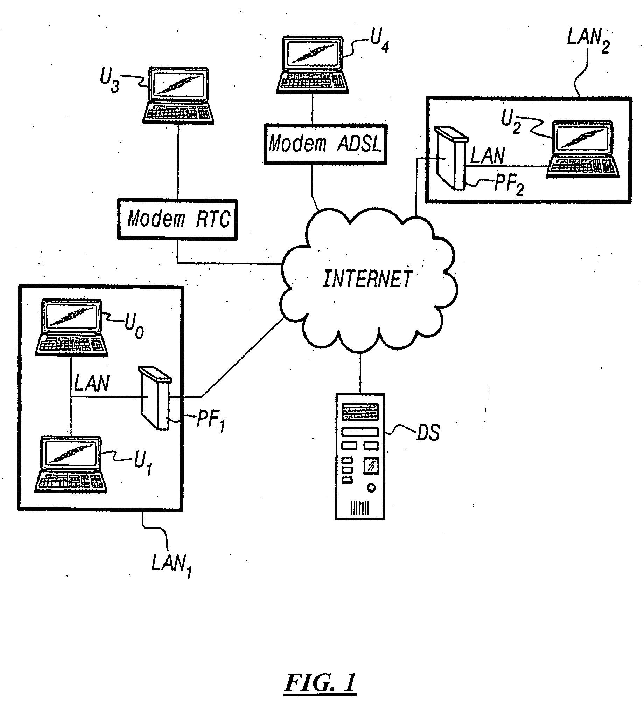

La **figure 1** représente l'architecture d'un système de diffusion automatique et simultané de documents électroniques sur Internet dans lequel on peut mettre en oeuvre la présente invention.

A titre d'exemple non limitatif, dans le système représenté sur la figure précitée, un ensemble d'utilisateurs participe à une session commune, consistant en un accès commun à un serveur dédié, gérant cette session.

La notion de session recouvre toute télé-réunion, conférence téléphonée, vidéo-conférence ou autres, au cours de laquelle l'ensemble des utilisateurs précités sont amenés à consulter des documents électroniques diffusés par l'intermédiaire de l'Internet.

Par ailleurs, concernant les sessions précitées, les situations d'usage classique concernent, notamment, le travail coopératif de personnes travaillant sur leur réseau d'entreprise avec d'autres personnes situées sur un autre réseau d'entreprise, l'animation d'équipes commerciales, les réunions de projets, le télé-enseignement, la vente à distance ou la simple diffusion d'informations en interne ou en externe dans le cadre d'une entreprise.

Ainsi que représenté sur la figure précitée, l'ensemble des utilisateurs participant à une session de visualisation de documents électroniques, tels que des pages Web, sur Internet, comprend un utilisateur organisateur U₀ et quatre utilisateurs invités dont les terminaux sont notés U₁ à U₄.

Dans cet exemple, les utilisateurs précités sont situés à des endroits différents accédant à Internet ou à un Intranet par différents réseaux d'accès tels que le réseau téléphonique commuté RTC, un réseau à haut débit d'accès ADSL (*Asymmetric Digital Subscriber Line*), un réseau local ou réseau d'entreprise LAN ou tout réseau Extranet.

L'ensemble des utilisateurs est connecté à l'Internet par l'intermédiaire de fournisseurs d'accès à Internet non représentés sur la figure.

A titre d'exemple non limitatif, l'utilisateur organisateur U₀ et l'utilisateur invité U₁ se situent dans une même entreprise et sont connectés en réseau local LAN₁ avec un pare-feu PF₁ protégeant le réseau d'entreprise de l'Internet.

De la même façon, l'utilisateur invité U₂ est connecté à l'Internet par l'intermédiaire d'un pare-feu PF₂ et d'un réseau local LAN₂.

Enfin, les utilisateurs invités U₃ et U₄ sont directement connectés à l'Internet via leur fournisseur d'accès non représenté, en utilisant respectivement, à titre d'exemple non limitatif, un modem RTC et un modem à haut débit, ADSL par exemple.

On considère que les pare-feu ont des ports standard HTTP (*HyperText Transfer Protocol*) ouverts, ce qui correspond au cas le plus général pour tous les pare-feu.

Dans cet exemple d'architecture, la référence DS concerne un serveur dédié à la diffusion automatique et simultanée de pages Web. A ce titre, le serveur DS possède un site Web à partir duquel on peut télécharger les pages Web selon l'invention. Le serveur dédié DS constitue en pratique une plate-forme de services permettant d'exécuter l'ensemble des transactions entre chaque terminal d'utilisateur organisateur et/ou invité à partir de transactions du type client/serveur.

On notera ici que l'on entend par "page Web", tout document électronique hypertexte diffusé sur le Web.

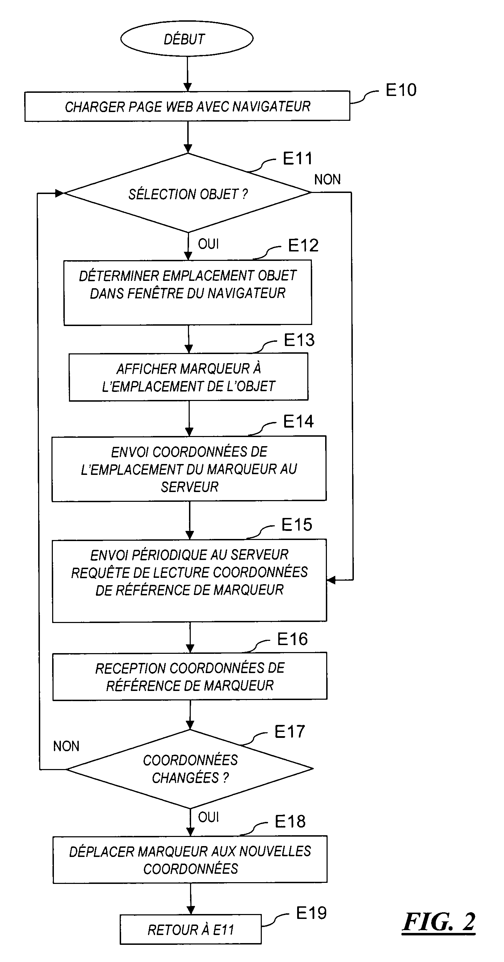

Chaque page Web selon l'invention, téléchargeable à partir d'un serveur, tel que le serveur DS, sur l'Internet, permet de mettre en oeuvre un procédé de pointage synchronisé selon l'invention (décrit de façon détaillée plus bas, en liaison avec la figure 2) lorsqu'elle est affichée simultanément dans une pluralité de terminaux utilisateurs connectés au réseau.

Dans l'exemple représenté à la figure 1, on suppose que les participants à la session de travail coopératif ont tous préalablement téléchargé sur leur poste de travail respectif une même page Web selon l'invention.

Une page Web selon l'invention comporte quatre portions de code ou modules, spécifiques, incorporées dans son code de langage hypertexte. Selon un exemple de réalisation les pages Web selon l'invention sont codées en langage HTML (*HyperText Markup Language*). On peut cependant appliquer la présente invention à des documents hypertextes écrits dans un autre langage de type hypertexte, tel que par exemple le langage XML (*eXtensible Markup Language*).

Le premier module, désigné dans la présente description par "module d'affichage de marqueur" ou module *Affiche_Marqueur,* incorporé selon l'invention dans la page Web considérée, affichée dans un terminal utilisateur donné, est exécuté en réponse à la sélection d'un objet de la page Web, avec pour résultat, l'affichage d'un marqueur dans la fenêtre du navigateur du terminal, à l'emplacement de l'objet sélectionné.

A titre d'exemple, dans le système de diffusion de documents représenté à la figure 1, la sélection d'un objet du contenu de la page Web affichée peut être opérée par l'utilisateur organisateur U₀ dans le cadre d'une réunion de travail. On imagine alors que cette session de travail sur le Web est couplée avec une réunion téléphonique.

En pratique, la sélection d'un objet du contenu de la page Web est effectuée à l'aide d'un dispositif de pointage, telle qu'une souris, couplé à un curseur affiché à l'écran du terminal.

Le marqueur affiché peut être un symbole graphique prédéterminé tel que par exemple, une croix ou un cercle, mais dans tous les cas différentiable du symbole graphique correspondant au curseur du dispositif de pointage.

Conformément à l'invention, la page Web considérée comprend un second module, désigné dans le présent exposé par "module de mise à jour de position de pointeur" ou module *MaJ_Pos_Marqueur.* Ce second module est exécuté en réponse à la sélection de l'objet précité de la page Web de sorte qu'une information représentative de l'emplacement de l'objet sélectionné dans la fenêtre du navigateur, est créée et envoyée à un serveur sur le réseau, distinct ou non du serveur (DS) hébergeant les pages Web, afin d'y stocker cette information en tant qu'information de position de référence de marqueur.

Le troisième module incorporé conformément à l'invention dans la page Web considérée, est désigné ici par "module de lecture de position de référence de marqueur" ou module *Lire_PosRef_Marqueur,* et est exécuté périodiquement de manière à envoyer au serveur précité une requête de lecture de l'information courante de position de référence de marqueur.

Enfin, conformément à l'invention, la page Web considérée comprend un quatrième module, désigné ici par "module de mise à jour d'affichage de marqueur" ou module *MaJ_Affichage_Marqueur,* exécuté lors de la réception d'une réponse en provenance du serveur et contenant l'information courante de position de référence de marqueur. L'exécution de ce module permet d'afficher un marqueur dans la fenêtre du navigateur à la position de référence de marqueur, obtenue suite à l'exécution du module de lecture de position de référence de marqueur.

En pratique, ces différents modules sont implémentés sous la forme d'une ou plusieurs fonctions JavaScript.

Par ailleurs, bien que ces modules soient présentés ici, pour clarifier l'exposé, comme des blocs logiciels distincts, en pratique ces modules peuvent être inclus à l'intérieur d'une même portion de code JavaScript.

On rappelle ici que JavaScript est un langage de script développé à l'origine par la société Netscape et destiné à s'intégrer dans des documents Web. Contrairement au langage Java qui est un langage compilé, JavaScript est un langage interprété, c'est-à-dire que c'est le code source du script qui sert à son exécution. Ainsi, le navigateur Web lit le source JavaScript intégré aux pages Web, dans leur code HTML, et interprète ce code pour en donner une exécution.

Les modules JavaScript selon l'invention, précités, sont donc directement intégrés dans le code des pages HTML et c'est le navigateur du terminal utilisateur qui interprète le code HTML et JavaScript lorsqu'il charge le code des pages Web. Ainsi, le procédé selon l'invention de pointage synchronisé peut être mis en oeuvre sans qu'il soit nécessaire, contrairement à l'état de l'art, de télécharger ou installer au préalable un logiciel additionnel dans chacun des terminaux utilisateurs.

Par conséquent, grâce aux pages Web selon l'invention, le procédé de pointage conforme à l'invention peut être mis en oeuvre même dans des environnements réseaux protégés par des dispositifs de sécurité informatique tels que des pare-feu.

Par ailleurs, un langage de script comme JavaScript est avantageux du point de vue de la sécurité, car toutes les opérations qui peuvent porter atteinte à la sécurité du terminal utilisateur telles que le vol d'information, la destruction de fichiers, sont impossibles. En effet, il est notamment impossible de créer un fichier ou d'accéder à une base de données avec JavaScript.

En liaison avec la **figure 2**, on va à présent décrire le procédé, selon l'invention, de pointage synchronisé d'un objet du contenu d'une page Web affichée simultanément dans une pluralité de terminaux utilisateurs connectés à un réseau de type Internet.

Le procédé de pointage selon l'invention est mis en oeuvre dès lors qu'une page Web selon l'invention, telle que décrite plus haut, est chargée et affichée simultanément dans l'ensemble des terminaux utilisateurs (U₀ à U₄). Cette étape préalable de chargement d'une page Web est indiquée sur la figure 2 par la référence E10.

Bien sûr, on suppose que l'affichage de la page web est synchronisé entre les divers terminaux utilisateurs, c'est-à-dire que la même portion de la page Web considérée est affichée de manière quasi simultanée dans chaque terminal d'utilisateur. Il est à noter que la notion de synchronisation de l'affichage des pages Web correspond à celle d'une synchronisation factuelle et non pas temporelle de l'affichage effectif de chaque page courante sur l'ensemble des terminaux utilisateurs, en raison du caractère asynchrone des transmissions entre chacun des terminaux utilisateurs et le serveur dédié DS.

Lorsque l'utilisateur d'un terminal utilisateur quelconque sélectionne un objet du contenu de la page Web affiché sur son écran, cette sélection s'opérant typiquement avec un dispositif de pointage tel qu'une souris, le module *Affiche_Marqueur* de la page Web, détecte cette action, à l'étape E11, et détermine, à l'étape E12, l'emplacement de l'objet sélectionné dans la fenêtre du navigateur Web équipant le terminal considéré.

Selon un mode de réalisation préféré, un dispositif de pointage, tel qu'une souris, étant couplé avec un curseur affiché à l'écran, la localisation de l'objet sélectionné dans la page Web est réalisée en déterminant la position de ce curseur dans la fenêtre du navigateur. En pratique, la position du curseur dans la fenêtre est traduite en coordonnées graphiques.

A l'étape E13, le module *Affiche_Marqueur* affiche un marqueur, c'est-à-dire un symbole graphique prédéterminé, dans la fenêtre du navigateur, à l'emplacement défini par les coordonnées du curseur associé au dispositif de pointage, ce qui correspond à l'emplacement de l'objet sélectionné du contenu de la page Web affichée.

A l'étape E14, suite à l'affichage par le module *Affiche_Marqueur* d'un marqueur à l'emplacement de l'objet sélectionné, le module *MaJ_Pos_Marqueur,* incorporé dans la page Web en cours, est exécuté, avec pour résultat, la création d'un message de requête à destination du serveur (DS), ce message contenant les coordonnées du marqueur affiché, c'est-à-dire les coordonnées du curseur de pointage après la sélection de l'objet.

En pratique ce message de requête est une requête selon le protocole HTTP contenant dans le corps de la requête une commande d'envoi de données, par exemple la commande POST ou PUT, avec comme arguments l'information de position du marqueur (coordonnées graphiques) et l'adresse Web correspondante (URL - *Universal Resource Locator*) du serveur.

A l'adresse URL du serveur, qui est spécifiée dans la requête HTTP précitée, correspond en pratique un module programme stocké sur le serveur. Ce module programme, recevant la requête, en extrait l'information de position du marqueur et la sauvegarde dans un emplacement mémoire dédié, par exemple, sur un disque dur ou dans une mémoire RAM équipant le serveur. L'information de position du marqueur stockée dans le serveur devient alors l'information de position de référence de marqueur.

En pratique, le module programme précité, est une page Web dynamique dont l'adresse URL est incluse dans la requête HTTP précitée. On peut utiliser par exemple une page PHP (*"PHP: Hypertext Preprocessor''*) ou une page ASP (*Active Server Page*). La page Web dynamique est alors exécutée localement dans le serveur pour stocker en mémoire l'information de position de référence de marqueur.

En effet, contrairement à une page HTML classique, dans le cas d'une page PHP ou ASP, le serveur a un rôle plus actif que le simple envoi de la page demandée. Ainsi, il extrait de la requête l'adresse URL demandée et ouvre le fichier correspondant à cette adresse, puis, du fait de l'extension du fichier (".asp" ou ".php") différente des pages HTML classiques (".html"), le serveur détermine qu'il y a une action supplémentaire à effectuer : la page Web dynamique est un script, c'est-à-dire une successions d'instructions, que le serveur exécute. Le résultat de l'exécution de ce script est généralement un fichier contenant du code HTML et JavaScript, qui est ensuite renvoyé au navigateur du terminal utilisateur, par une réponse HTTP classique. Dans le contexte de l'invention, cette réponse peut être un message indiquant que l'action demandée s'est bien déroulée ou, dans le cas d'une requête de lecture de l'information de position de référence, une réponse HTTP contenant l'information demandée (voir ci-après, étape E15).

De retour à la figure 2, comme représenté à l'étape E15, dans chaque terminal utilisateur, le module *Lire_PosRef_Marqueur* mentionné plus haut dans l'exposé et incorporé dans la page Web en cours d'affichage, est exécuté périodiquement dans chaque terminal utilisateur, de manière à envoyer au serveur (DS) une requête de lecture de l'information courante de position de référence de marqueur.

De même que pour l'étape E14 décrite ci-dessus, la requête de lecture de l'information de position de référence de marqueur stockée dans le serveur, est une requête selon le protocole HTTP à l'adresse d'une page Web dynamique stockée sur le serveur, par exemple une page PHP. Cette page Web dynamique s'exécute localement dans le serveur pour lire en mémoire l'information de position de référence de marqueur et la renvoyer au terminal utilisateur, incorporée dans une réponse HTTP.

D'une manière pratique, pour chaque terminal utilisateur, les messages de lecture périodiques de l'information de position de référence de marqueur, peuvent être émis par chacun des terminaux participant à la session de travail coopératif dans une plage de périodes comprise entre 2 secondes et 5 secondes.

En pratique, ces messages de lecture sont des requêtes HTTP contenant dans le corps de la requête une commande d'obtention de données, par exemple la commande GET, avec comme arguments le nom de la variable contenant l'information de position de référence du marqueur et l'adresse URL de la page dynamique correspondante sur le serveur.

A l'étape E16, le terminal utilisateur considéré reçoit un message HTTP de réponse du serveur, le message contenant l'information de position de référence de marqueur courante, c'est-à-dire la dernière sauvegardée dans le serveur. L'information reçue est prise en compte par le module JavaScript *MaJ_Affichage_Marqueur* qui est exécuté par le navigateur du terminal, dans le but d'afficher dans la fenêtre du navigateur un marqueur à la position de référence reçue.

Comme représenté à la figure 2, de manière pratique, un test E17 est d'abord effectué pour comparer les coordonnées courantes du marqueur affiché à l'écran du terminal considéré avec celles venant d'être reçues du serveur. Si les coordonnées ont changé (E17, oui), le module *MaJ_Affichage_Marqueur* déplace, à l'étape E18, le marqueur existant aux coordonnées de référence reçues du serveur. Dans le cas contraire (E17, non), on retourne à l'étape E11 d'attente de sélection d'un objet dans le terminal considéré.

Selon une variante de réalisation concernant le processus de mise à jour de la position du marqueur (étapes E15 à E18), le terminal utilisateur considéré envoie au serveur une requête HTTP contenant les coordonnées du marqueur en cours d'affichage dans le terminal, le serveur exécute à la réception de la requête une page Web dynamique avec pour résultat la comparaison des coordonnées reçues avec celles de référence stockées en mémoire dans le serveur. Ensuite, si les coordonnées reçues et celles de référence sont identiques, le serveur envoie une réponse HTTP contenant une variable dont la valeur indique que les coordonnées n'ont pas changé. Dans le cas contraire, le serveur envoie au terminal utilisateur une réponse contenant les nouvelles coordonnées qui sont alors appliquées dans le terminal pour déplacer le marqueur dans la fenêtre du navigateur.

Il est à noter que dans le cas où il n'existe pas encore de marqueur dans la fenêtre du navigateur du terminal considéré, un marqueur est alors créé et affiché à la position de référence de marqueur reçue du serveur. On peut prévoir cependant que, dès qu'un utilisateur se connecte à la session de travail coopératif en cours, un marqueur par défaut soit affiché à un endroit prédéterminé, par exemple dans le coin inférieur droit, de la fenêtre du navigateur.

Suite à la mise à jour (E18) de l'affichage du marqueur dans la fenêtre du navigateur, on retourne, comme indiqué à l'étape E19, à l'étape E11 d'attente de sélection d'un objet du contenu de la page Web en cours d'affichage.

On notera ici que, à titre d'exemple non limitatif et pour des raisons de simplification de l'exposé, on a représenté à la figure 2 le déroulement du procédé selon l'invention d'une manière linéaire suivant l'enchaînement représenté des étapes du procédé.

Bien entendu, les étapes représentées peuvent être implémentées selon un ordre d'exécution différent, et en particulier, il apparaît clairement que le sous-ensemble d'étapes E11-E14 et le sous-ensemble d'étapes E15-E18, sont indépendants et peuvent être exécutés en parallèle.

Par ailleurs, dans le cadre de la présente description, de manière à simplifier l'exposé de l'invention, le serveur hébergeant des pages Web selon l'invention, le serveur fournissant la plate-forme de services permettant l'établissement d'une session de travail coopératif, et le serveur gérant l'information de position de référence de marqueur, sont présentés comme étant confondus dans une même machine serveur. Cependant, on peut prévoir d'implémenter ces différents serveurs sur des machines distinctes connectées au réseau et communiquant entre elles selon un protocole de type client-serveur.

## Revendications

1. Procédé de pointage synchronisé d'un objet du contenu d'une page Web affichée simultanément dans un ensemble de terminaux utilisateurs connectés à un réseau de type Internet, ledit procédé comprenant une étape préalable de chargement de ladite page Web par un navigateur Web dans chaque terminal utilisateur, **caractérisé en ce qu'**il comporte les étapes suivantes mises en oeuvre dans chaque terminal utilisateur :
(A) - en réponse à la sélection (E11) d'un objet de la page Web, exécution d'une première portion de code de la page Web et affichage (E12, E13) en conséquence d'un marqueur dans la fenêtre du navigateur à l'emplacement de l'objet sélectionné ;
(B) - exécution d'une seconde portion de code de la page Web et envoi (E14) en conséquence d'une information représentative de l'emplacement du marqueur dans la fenêtre du navigateur à un serveur sur le réseau afin de l'y stocker en tant qu'information de position de référence de marqueur ;
(C) - exécution périodique d'une troisième portion de code de la page Web et envoi (E15) en conséquence au serveur d'une requête de lecture de l'information courante de position de référence de marqueur ;
(D) - réception (E16) d'une réponse contenant l'information courante de position de référence de marqueur, exécution d'une quatrième portion de code de la page Web et affichage (E17, E18) en conséquence d'un marqueur dans la fenêtre du navigateur à la position de référence de marqueur.

2. Procédé selon la revendication 1, **caractérisé en ce qu'**à l'étape (A) la sélection de l'objet de la page Web est effectuée à l'aide d'un dispositif de pointage couplé à un curseur affiché à l'écran du terminal et **en ce que** l'affichage d'un marqueur à l'emplacement de l'objet sélectionné comprend les opérations suivantes :
- détermination de la position du curseur dans la fenêtre du navigateur ;
- affichage d'un marqueur dans la fenêtre du navigateur à la position déterminée du curseur.

3. Procédé selon la revendication 1 ou 2, **caractérisé en ce qu'**à l'étape (D), l'affichage d'un marqueur comprend les opérations suivantes :
- si un marqueur existe déjà dans la fenêtre du navigateur du terminal, comparaison de la position de référence de marqueur avec la position courante du marqueur existant dans la fenêtre du navigateur, et déplacement du marqueur existant à la position de référence si la position de référence est différente de la position courante du marqueur existant ;
- sinon, s'il n'existe pas encore de marqueur dans la fenêtre du navigateur, affichage d'un marqueur à la position de référence de marqueur.

4. Procédé selon l'une quelconque des revendications précédentes, **caractérisé en ce que** lesdits terminaux communiquent avec ledit serveur sur le réseau en utilisant seulement le protocole HTTP.

5. Procédé selon la revendication 4, **caractérisé en ce que**, à l'étape (B), l'envoi et le stockage dans le serveur de l'information représentative de l'emplacement du marqueur, est réalisé par l'envoi d'une requête selon le protocole HTTP à l'adresse d'une page Web dynamique stockée sur le serveur, par exemple une page PHP, avec en arguments ladite information représentative de l'emplacement du marqueur, ladite page Web dynamique s'exécutant alors sur le serveur pour stocker en mémoire l'information de position de référence de marqueur.

6. Procédé selon la revendication 4 ou 5, **caractérisé en ce que**, à l'étape (C), la requête de lecture de l'information de position de référence de marqueur stockée dans le serveur, est une requête selon le protocole HTTP à l'adresse d'une page Web dynamique stockée sur le serveur, par exemple une page PHP, ladite page Web dynamique s'exécutant localement dans le serveur pour lire en mémoire l'information de position de référence de marqueur et la renvoyer au terminal utilisateur, incorporée dans une réponse selon le protocole HTTP.

7. Procédé selon l'une quelconque des revendications précédentes, **caractérisé en ce que** lesdites première, seconde, troisième et quatrième portions de code de la page Web, sont des fonctions écrites dans un langage de script de type JavaScript, lesdites fonctions étant intégrées dans le code hypertexte de la page Web.

8. Page Web téléchargeable à partir d'un serveur sur un réseau de type Internet, ladite page étant apte à mettre en oeuvre un procédé de pointage synchronisé selon l'une quelconque des revendications 1 à 7, lorsqu'elle est affichée simultanément dans une pluralité de terminaux utilisateurs connectés au réseau, ladite page Web, affichée dans un terminal utilisateur quelconque parmi la pluralité de terminaux utilisateurs, étant **caractérisée en ce qu'**elle comporte les portions de code suivantes :
- une première portion de code exécutée en réponse à la sélection, dans le terminal utilisateur, d'un objet de la page Web, pour afficher un marqueur à l'emplacement de l'objet sélectionné dans la fenêtre du navigateur du terminal utilisateur ;
- une seconde portion de code exécutée en réponse à la sélection, dans le terminal utilisateur, d'un objet de la page Web, pour envoyer une information représentative de l'emplacement de l'objet sélectionné dans la fenêtre du navigateur du terminal, à un serveur sur le réseau afin de l'y stocker en tant qu'information de position de référence de marqueur ;
- une troisième portion de code exécutée périodiquement dans le terminal utilisateur pour envoyer au serveur une requête de lecture de l'information courante de position de référence de marqueur ;
- une quatrième portion de code exécutée lors de la réception, dans le terminal utilisateur, d'une réponse contenant l'information courante de position de référence de marqueur, pour afficher un marqueur dans la fenêtre du navigateur du terminal, à la position de référence de marqueur.

9. Serveur de pages Web sur un réseau de type Internet, ledit serveur étant **caractérisé en ce qu'**il héberge des pages Web selon la revendication 8.

10. Serveur sur un réseau de type Internet, **caractérisé en ce qu'**il comporte des moyens de mémorisation d'une information de position de référence de marqueur et des moyens de traitement aptes à recevoir des requêtes de terminaux utilisateurs et envoyer des réponses correspondantes vers les terminaux utilisateurs, afin de mettre en oeuvre un procédé selon l'une quelconque des revendications 1 à 7.

11. Serveur selon la revendication 10, **caractérisé en ce que** lesdits moyens de traitement incluent au moins une page Web dynamique.

12. Terminal utilisateur, notamment un ordinateur personnel, relié à un réseau de type Internet, dans lequel est affichée au moins une page Web selon la revendication 8, au cours d'une session de travail coopératif consistant à l'affichage simultané de pages Web dans une pluralité de terminaux utilisateurs et mettant en oeuvre un procédé de pointage selon l'une quelconque des revendications 1 à 7.

13. Système de diffusion simultanée de documents électroniques sur un réseau de type Internet entre différents terminaux utilisateurs connectés au réseau, au cours d'une session commune consistant en un accès commun à un serveur dédié, **caractérisé en ce qu'**il inclut des moyens aptes à mettre en oeuvre un procédé de pointage synchronisé selon l'une quelconque des revendications 1 à 7.
